# EUROPÄISCHE PATENTSCHRIFT

(11) **EP 3 032 318 B1**
(45) Veröffentlichungstag und Bekanntmachung des Hinweises auf die Patenterteilung: **20.11.2019**
(21) Anmeldenummer: 15198696.5
(22) Anmeldetag: 09.12.2015
(51) Int. Cl.: G02B 27/01, B60K 35/00

(54) **ANZEIGEVORRICHTUNG FÜR EIN KRAFTFAHRZEUG MIT DREHBAR GELAGERTER SPIEGELEINRICHTUNG, KRAFTFAHRZEUG SOWIE VERFAHREN**
DISPLAY DEVICE FOR A MOTOR VEHICLE COMPRISING A ROTATABLY MOUNTED MIRROR DEVICE, MOTOR VEHICLE AND METHOD
DISPOSITIF D'AFFICHAGE POUR UN VEHICULE AUTOMOBILE COMPRENANT UN DISPOSITIF DE MIROIR TOURNANT, VEHICULE AUTOMOBILE ET PROCEDE

(30) Priorität: 09.12.2014 DE 102014118181
(43) Veröffentlichungstag der Anmeldung: 15.06.2016
(73) Patentinhaber: Valeo Comfort and Driving Assistance, 94046 Créteil Cedex (FR)
(72) Erfinder: Simonis, Karl, 74321 Bietigheim-Bissingen (DE); Schoch, Lars, 74321 Bietigheim-Bissingen (DE); Kuntze, Daniel, 74321 Bietigheim-Bissingen (DE)

(56) Entgegenhaltungen:
- EP-A1- 2 755 075
- JP-A- 2014 058 299
- US-A- 5 204 666
- US-A1- 2014 320 382

## Beschreibung

Die vorliegende Erfindung betrifft eine Anzeigevorrichtung für ein Kraftfahrzeug, mit einem Gehäuse, mit einer Spiegeleinrichtung, welche ein Anzeigeelement mit einer semitransparenten Spiegelfläche aufweist, und mit einer Antriebseinrichtung, mittels welcher die Spiegeleinrichtung zwischen einer Verstaustellung, in welcher das Anzeigeelement innerhalb des Gehäuses angeordnet ist, und einer Gebrauchsstellung, in welcher das Anzeigeelement zumindest bereichsweise außerhalb des Gehäuses angeordnet ist, bewegbar ist. Die Erfindung betrifft außerdem ein Kraftfahrzeug mit einer solchen Anzeigevorrichtung. Schließlich betrifft die vorliegende Erfindung ein Verfahren zum Betreiben einer Anzeigevorrichtung für ein Kraftfahrzeug.

Das Interesse richtet sich vorliegend auf Anzeigevorrichtungen für Kraftfahrzeuge, die als Kopf-oben-Anzeigevorrichtungen beziehungsweise als Head-up Displays ausgebildet sind. Eine derartige Anzeigevorrichtung umfasst üblicherweise eine Bilderzeugungseinrichtung, mit der Licht abgestrahlt werden kann. Ferner umfasst die Anzeigevorrichtung eine Optikeinrichtung, welche beispielsweise einen oder mehrere Spiegel umfassen kann. Mit der Optikeinrichtung kann das von der Bilderzeugungseinrichtung abgestrahlte Licht auf ein Anzeigeelement projiziert werden. Das Anzeigeelement weist eine semitransparente Spiegelfläche auf. Diese semitransparente Spiegelfläche kann beispielsweise durch einen Bereich der Windschutzscheibe des Kraftfahrzeugs bereitgestellt werden. Ferner sind Anzeigevorrichtungen bekannt, die ein separates Anzeigeelement aufweisen. Solche Anzeigeelemente können auch als Combiner, Combinerspiegel oder Combinerscheibe bezeichnet werden. Durch eine Überlagerung der auf das Anzeigeelement projizierten Information, welche von diesem reflektiert wird, mit einer durch das Anzeigeelement hindurch scheinenden Information aus einer hinter dem Anzeigeelement gelegenen Umgebung kann somit ein virtuelles Bild beziehungsweise eine virtuelle Anzeige bereitgestellt werden.

Bei den Anzeigevorrichtungen, welche ein separates Anzeigeelement beziehungsweise einen Combinerspiegel aufweisen, ist üblicherweise eine Antriebseinrichtung vorgesehen, mittels welcher das Anzeigeelement zwischen einer Verstaustellung und einer Gebrauchsstellung bewegt werden kann. In der Verstaustellung kann das Anzeigeelement beispielsweise innerhalb eines Gehäuses der Anzeigevorrichtung angeordnet sein. In der Gebrauchsstellung kann das Anzeigeelement zumindest bereichsweise außerhalb des Gehäuses angeordnet sein. Somit weisen derartige Anzeigevorrichtungen üblicherweise mehrere Bauteile auf, die beweglich zueinander ausgebildet sind. Dies hat zur Folge, dass es bei Anzeigevorrichtungen mit Combinerspiegel immer wieder zu Geräuschreklamationen kommt. Dies ist beispielsweise dadurch begründet, dass Vibrationen des Motors auf die Anzeigevorrichtung übertragen werden und somit Klappergeräusche entstehen. Die Ursachen hierfür sind Toleranzen bei der Fertigung und/oder Montage der Bauteile und ein dadurch bedingtes Spiel in der Führung zwischen den Bauteilen.

Hierzu beschreibt die US 7,978,414 B2 ein Positionierungssystem für einen Combiner eines Head-up Displays. Das Positionierungssystem ist an einem Rahmen angeordnet, welcher eine Basisplatte aufweist. Ferner ist ein beweglicher Träger zum Halten des Combiners innerhalb des Rahmens vorgesehen. Der Träger ist zwischen einem ersten Ende des Rahmens, an welchem der Combiner in einer Verstaustellung angeordnet ist, und einem zweiten Ende des Rahmens, an welchem der Combiner in einer vollständig ausgefahrenen Position angeordnet ist, bewegbar.

Darüber hinaus beschreibt die EP 2 479 598 A1 ein Positionierungssystem für ein Head-up Display, welches einen Träger umfasst, der zwischen einer Verstaustellung oder einer Gebrauchsstellung mittels eines Bewegungsmechanismus bewegbar ist. Ferner ist ein Combiner auf dem Träger angeordnet. Mit Hilfe eines Winkelverstellmechanismus kann ein Neigungswinkel des Combiners eingestellt werden. Mit einem Antriebsmechanismus kann wahlweise die Bewegung des Combiners oder der Neigungswinkel des Combiners eingestellt werden.

Es ist Aufgabe der vorliegenden Erfindung, eine Lösung aufzuzeigen, die eine Anzeigevorrichtung der eingangs genannten Art, insbesondere eine Kopf-oben-Anzeigevorrichtung, zuverlässiger betrieben werden kann.
Diese Aufgabe wird erfindungsgemäß durch eine Anzeigevorrichtung, ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Anzeigevorrichtung für ein Kraftfahrzeug umfasst ein Gehäuse. Darüber hinaus umfasst die Anzeigevorrichtung eine Spiegeleinrichtung, welche ein Anzeigeelement mit einer semitransparenten Spiegelfläche aufweist. Zudem umfasst die Anzeigevorrichtung eine Antriebseinrichtung, mittels welcher die Spiegeleinrichtung zwischen einer Verstaustellung, in welcher das Anzeigeelement innerhalb des Gehäuses angeordnet ist, und einer Gebrauchsstellung, in welcher das Anzeigeelement zumindest bereichsweise außerhalb des Gehäuses angeordnet ist, bewegbar ist. Ferner weist die Spiegeleinrichtung ein Lageelement auf. Das Gehäuse weist ein zu dem Lagerelement korrespondierendes Gegenlagerelement auf. Dabei ist das Lagerelement in der Gebrauchsstellung der Spiegeleinrichtung drehbar zu dem Gegenlagerelement gelagert.

Die Anzeigevorrichtung kann in einem Kraftfahrzeug verwendet werden. Die Anzeigevorrichtung ist insbesondere als sogenannte Kopf-oben-Anzeigevorrichtung beziehungsweise als Head-up Display ausgebildet. Die Anzeigevorrichtung kann eine Bilderzeugungseinrichtung aufweisen, mit der Licht abgestrahlt werden kann. Insbesondere kann mit der Bilderzeugungseinrichtung ein Bild bereitgestellt werden. Das von der Bilderzeugungseinrichtung abgestrahlte Licht kann mithilfe einer Optikeinrichtung auf das Anzeigeelement der Spiegeleinrichtung projiziert werden. Das Anzeigeelement weist eine semitransparente Spiegelfläche auf. Das Anzeigeelement kann beispielsweise aus Glas oder aus einem Kunststoff gefertigt sein. Das Anzeigeelement kann auch als Combinerspiegel, Combinerscheibe oder als Combiner bezeichnet werden. Somit wird das Licht, welches auf das Anzeigeelement projiziert wird zu den Augen eines Fahrers des Kraftfahrzeugs reflektiert. Zudem gelangt zu den Augen des Fahrers das Licht, welches von einem Umgebungsbereich hinter dem Anzeigeelement durch das Anzeigeelement hindurch zu dem Fahrer scheint. Durch die Überlagerung des Lichts, welches von dem Anzeigeelement reflektiert wird, und dem Licht, welches durch das Anzeigeelement hindurch scheint, wird dem Fahrer ein virtuelles Bild beziehungsweise eine virtuelle Anzeige bereitgestellt.

Die Anzeigevorrichtung weist die Spiegeleinrichtung auf, welche wiederum das Anzeigeelement umfasst. Ferner ist eine Antriebseinrichtung vorgesehen, mittels welcher die Spiegeleinrichtung zwischen einer Verstaustellung und einer Gebrauchsstellung und umgekehrt bewegt werden kann. Die Antriebseinrichtung kann beispielsweise einen entsprechenden Stellmotor umfassen. In der Gebrauchsstellung befindet sich die Spiegeleinrichtung innerhalb des Gehäuses der Anzeigevorrichtung. In der Gebrauchsstellung kann die Spiegeleinrichtung mithilfe der Antriebseinrichtung aus dem Gehäuse heraus bewegt werden, sodass das Anzeigeelement in der Gebrauchsstellung zumindest bereichsweise außerhalb des Gehäuses angeordnet ist.

Die Spiegeleinrichtung weist ferner ein Lagerelement auf. An dem Gehäuse ist ortsfest ein zu dem Lagerelement korrespondierendes Gegenlagerelement angeordnet. In der Gebrauchsstellung der Spiegeleinrichtung ist das Lagerelement drehbar zu dem Gegenlagerelement gelagert. Beim Bewegen der Spiegeleinrichtung von der Verstaustellung in die Gebrauchsstellung läuft das Lagerelement der Spiegeleinrichtung auf das Gegenlagerelement des Gehäuses auf. Das Lagerelement der Spiegeleinrichtung und das korrespondierende Gegenlagerelement des Gehäuses bildet zusammen ein Drehlagerelement. Damit kann die Spiegeleinrichtung in der Gebrauchsstellung gedreht beziehungsweise verkippt werden. Somit kann die Spiegeleinrichtung bei der in dem Kraftfahrzeug angeordneten Anzeigevorrichtung auf eine Augenposition eines Fahrers des Kraftfahrzeugs eingestellt werden.

Bevorzugt ist das Lagerelement in der Gebrauchsstellung der Spiegeleinrichtung an einem dem Gehäuse zugewandten Randbereich der Spiegeleinrichtung angeordnet. Die Spiegeleinrichtung beziehungsweise das Anzeigeelement der Spiegeleinrichtung kann im Wesentlichen plattenförmig ausgebildet sein. Dabei kann das Lagerelement der Spiegeleinrichtung in einem unteren Randbereich des Anzeigeelements zugeordnet sein. Dieser untere Randbereich ist dem Gehäuse der Anzeigevorrichtung zugeordnet. Mithilfe des Lagerelements der Spiegeleinrichtung und des korrespondierenden Gegenlagerelements des Gehäuses kann eine rotatorische Bewegung der Spiegeleinrichtung und somit des Anzeigeelements gegenüber dem Gehäuse ermöglicht werden. Somit kann das Anzeigeelement auf einfache Weise an die Augenposition des Fahrers angepasst werden.

In einer weiteren Ausführungsform ist die Antriebseinrichtung dazu ausgelegt, die Spiegeleinrichtung zwischen der Verstaustellung und der Gebrauchsstellung translatorisch zu bewegen. Zudem kann die Spiegeleinrichtung mittels der Antriebseinrichtung von der Gebrauchsstellung in die Verstaustellung translatorisch bewegt werden. In der Gebrauchsstellung kommt das Lagerelement der Spiegeleinrichtung mit dem korrespondierenden Gegenlagerelement des Gehäuses in Kontakt beziehungsweise in Berührung. In der Gebrauchsstellung der Spiegeleinrichtung wird somit durch das Lagerelement und das Gegenlagerelement ein Drehlager bereitgestellt und somit in der Gebrauchsstellung eine rotatorische Bewegung des Anzeigeelements beziehungsweise der Combinerspiegel ermöglichen.

In einer weiteren Ausgestaltung ist die Antriebseinrichtung dazu ausgelegt, die Spiegeleinrichtung in der Gebrauchsstellung zu drehen. In der Gebrauchsstellung der Spiegeleinrichtung würde durch das Lagerelement und das korrespondierende Gegenlagerelement ein Drehlager bereitgestellt. Wenn die Spiegeleinrichtung nach Erreichen der Gebrauchsstellung mit der Antriebseinrichtung weiter bewegt wird, kann eine Drehbewegung der Spiegeleinrichtung relativ zu dem Gehäuse ermöglicht werden. Somit kann mit nur einer einzigen Antriebseinrichtung sowohl die Bewegung der Spiegeleinrichtung zwischen der Verstaustellung und der Gebrauchsstellung sowie die Drehung der Spiegeleinrichtung in der Gebrauchsstellung ermöglicht werden. Dabei können das Lagerelement, das Gegenlagerelement und/oder die Antriebseinrichtung derart ausgebildet sein, dass die Spiegeleinrichtung in der Gebrauchsstellung durch die Antriebseinrichtung im Uhrzeigersinn oder gegen den Uhrzeigersinn gedreht werden kann. Dies ermöglicht zwei unterschiedlich geneigte Ausfahrrichtungen für die Spiegeleinrichtung. Somit kann die Antriebseinrichtung durch die Ausgestaltung des Lagerelements, des Gegenlagerelements und/oder der Antriebseinrichtung an unterschiedliche Bauraumbedingung technisch und mechanisch angepasst werden.

Weiterhin ist es vorteilhaft, wenn die Antriebseinrichtung einen Spindelantrieb umfasst. Somit kann eine Antriebseinrichtung mit einer linearen Kinematik bereitgestellt werden. Die Spiegeleinrichtung kann somit auf einfache Weise translatorisch von der Verstaustellung in die Gebrauchsstellung und umgekehrt bewegt werden. Somit kann eine zuverlässige Linearführung für die Spiegeleinrichtung bereitgestellt werden.

Die Lagereinrichtung weist eine Ausnehmung auf und die Gegenlagerrichtung einen Lagerzapfen, welcher in der Gebrauchsstellung der Spiegeleinrichtung zumindest bereichsweise in der Ausnehmung angeordnet ist. Die Ausnehmung der Lagereinrichtung kann sich beispielsweise über die komplette Länge der Spiegeleinrichtung an dem Randbereich erstrecken, welcher dem Gehäuse zugeordnet ist. Die Ausnehmung und/oder der Lagerzapfen können in der bestimmungsgemäßen Einbaulageanzeigevorrichtung in dem Kraftfahrzeug im Wesentlichen parallel zu einer Fahrzeugquerachse angeordnet sein. Somit kann die Spiegeleinrichtung und somit das Anzeigeelement im eingebauten Zustand um die optische Achse verstellt werden.

Außerdem weist die Spiegeleinrichtung ein Halteelement auf, welches zum Halten des Anzeigeelements ausgelegt ist und welches das Lagerelement aufweist. Zudem weist die Spiegeleinrichtung ein Trägerelement auf, welches mit der Antriebseinrichtung verbunden ist. Das Anzeigeelement kann beispielsweise im Wesentlichen plattenförmig ausgebildet sein. Das Anzeigeelement kann zudem abgerundete Ecken aufweisen. Ferner kann das Anzeigeelement eine vorbestimmte Krümmung aufweisen. Das Halteelement dient dazu, das Anzeigeelement zu halten. Das Halteelement kann mit einem Trägerelement der Spiegeleinrichtung mechanisch verbunden sein. Das Trägerelement ist wiederum mit der Antriebseinrichtung verbunden. Beispielsweise kann das Trägerelement mechanisch mit einer Spindel des Spindelantriebs verbunden sein.

Weiterhin weist die Spiegeleinrichtung ein Federelement auf, wobei das Halteelement mittels des vorgespannten Federelements gegenüber dem Trägerelement gelagert ist. Zum Ausgleich von Bauteiltoleranzen und/oder Montagetoleranzen weist die Spiegeleinrichtung ein Federelement auf. Das Federelement beaufschlagt insbesondere das Lagerelement an der Spiegeleinrichtung unter Vorspannung an das Gegenlagerelement an dem Gehäuse. Über das Federelement können insbesondere alle Teile der Spiegeleinrichtung im Verstellbereich der Spiegeleinrichtung in der Gebrauchsstellung zueinander vorgespannt werden. Dadurch kann jegliches Spiel in dem Mechanismus eliminiert und somit eine Geräuschentwicklung unterbunden werden. Das Federelement kann so ausgestaltet sein, dass je nach Masse der Spiegeleinrichtung Vibrationen bei kritischen Frequenzen gedämpft werden. Hierzu kann die Federkraft und/oder die räumlichen Abmessungen und/oder die Federkonstante des Federelements entsprechend angepasst werden.

Weiterhin ist es vorteilhaft, wenn das Federelement in der Gebrauchsstellung und/oder in der Verstaustellung der Spiegeleinrichtung vorgespannt ist. Somit können sowohl in der Gebrauchsstellung als auch in der Verstaustellung der Spiegeleinrichtung Klappergeräusche in Folge von Vibrationen verhindert werden. Dabei können das Halteelement, das Trägerelement und/oder das Federelement derart ausgestaltet sein, dass das Federelement sowohl in der Gebrauchsstellung als auch in der Verstaustellung vorgespannt ist. Die Vorspannung des Federelements kann dadurch erreicht werden, da von der Antriebseinrichtung eine Kraft auf das Trägerelement ausgeübt wird, welche dann in Richtung des Halteelements bewegt wird. Somit können Störgeräusche beim Betrieb des Kraftfahrzeugs verhindert werden.

In einer weiteren Ausführungsform weist das Gehäuse ein Deckelelement auf, welches sich in der Verstaustellung der Spiegeleinrichtung in einer Geschlossenstellung und in der Gebrauchsstellung der Spiegeleinrichtung in einer Offenstellung befindet. Das Deckelelement verschließt das Gehäuse also, wenn sich die Spiegeleinrichtung in der Verstaustellung befindet. Wenn die Spiegeleinrichtung von der Verstaustellung in die Gebrauchsstellung bewegt wird, kann das Deckelelement von der Geschlossenstellung in die Offenstellung bewegt werden. Das Deckelelement kann über eine entsprechende Kinematik mit der Antriebseinrichtung von der Geschlossenstellung in die Offenstellung und umgekehrt bewegt werden. Durch das Deckelelement kann das Gehäuse verschlossen werden, wenn sich die Spiegeleinrichtung in der Verstaustellung befindet. Somit kann eine Verschmutzung der Spiegeleinrichtung und/oder der Antriebseinrichtung verhindert werden.

Bevorzugt weist die Anzeigevorrichtung eine Bilderzeugungseinrichtung zum Abstrahlen von Licht und eine Optikeinrichtung zum Projizieren des von der Bilderzeugungseinrichtung abgestrahlten Lichts auf das Anzeigeelement auf. Die Bilderzeugungseinrichtung kann beispielsweise einen entsprechenden Bildschirm umfassen, mit dem ein Bild erzeugt werden kann. Die Optikeinrichtung kann eine oder mehrere Spiegel umfassen, mittels welchen das Licht auf das Anzeigeelement projiziert werden kann.

Ein erfindungsgemäßes Kraftfahrzeug umfasst eine erfindungsgemäße Anzeigevorrichtung. Die Anzeigevorrichtung ist insbesondere derart in oder an dem Kraftfahrzeug angeordnet, dass dem Fahrer des Kraftfahrzeugs mittels der Anzeigevorrichtung ein virtuelles Bild beziehungsweise eine virtuelle Anzeige bereitgestellt werden kann. Das Kraftfahrzeug ist insbesondere als Personenkraftwagen ausgebildet.

Ein erfindungsgemäßes Verfahren dient zum Betreiben einer Anzeigevorrichtung für ein Kraftfahrzeug. Hierbei wird eine Spiegeleinrichtung, welche die Merkmale des Anspruchs 1 aufweist, mittels einer Antriebseinrichtung zwischen einer Verstaustellung, welcher das Anzeigeelement innerhalb eines Gehäuses angeordnet ist, und einer Gebrauchsstellung, in welcher das Anzeigeelement zumindest teilweise außerhalb des Gehäuses angeordnet ist, bewegt. Dabei wird das Lagerelement in der Gebrauchsstellung der Spiegeleinrichtung relativ zu dem Gegenlagerelement gedreht.

Die mit Bezug auf die erfindungsgemäße Anzeigevorrichtung vorgestellten Ausführungsformen und deren Vorteile gelten entsprechend für das erfindungsgemäße Kraftfahrzeug sowie für das erfindungsgemäße Verfahren.

Die Erfindung wird nun anhand von bevorzugten Ausführungsbeispielen sowie unter Bezugnahme auf die beigefügten Zeichnungen näher erläutert.

Dabei zeigen:
- Fig. 1: eine ausschnittsweise Darstellung eines Kraftfahrzeugs, welches eine Anzeigevorrichtung gemäß einer Ausführungsform der vorliegenden Erfindung aufweist,
- Fig. 2: die Anzeigevorrichtung in einer weiteren Ausführungsform, wobei sich eine Spiegeleinrichtung der Anzeigevorrichtung in einer Verstaustellung befindet;
- Fig. 3: die Anzeigevorrichtung gemäß Fig. 2, wobei sich die Spiegeleinrichtung in einer Gebrauchsstellung befindet; und
- Fig. 4: eine Detailansicht der Anzeigevorrichtung von Fig. 3.

In den Figuren werden gleiche und funktionsgleiche Elemente mit den gleichen Bezugszeichen versehen.

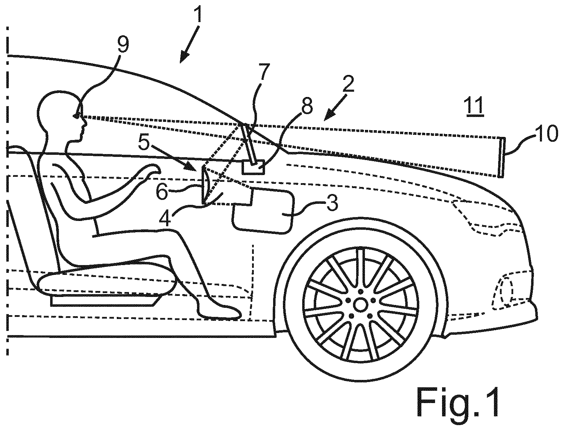

Fig. 1 zeigt eine ausschnittsweise Darstellung eines Kraftfahrzeugs 1 gemäß einer Ausführungsform der vorliegenden Erfindung. Das Kraftfahrzeug ist in dem vorliegenden Ausführungsbeispiel als Personenkraftwagen ausgebildet. Das Kraftfahrzeug 1 umfasst eine Anzeigevorrichtung 1. Die Anzeigevorrichtung 2 ist in dem vorliegenden Ausführungsbeispiel als Kopf-oben-Anzeigevorrichtung beziehungsweise als Head-up Display ausgebildet.

Die Anzeigevorrichtung 2 umfasst eine Bilderzeugungseinrichtung 3. Mittels der Bilderzeugungseinrichtung 3 kann Licht abgestrahlt werden. Insbesondere kann mit der Bilderzeugungseinrichtung 3 ein Bild bereitgestellt werden. Die Bilderzeugungseinrichtung 3 kann beispielsweise einen entsprechenden Bildschirm aufweisen, mit dem das Bild bereitgestellt werden kann beziehungsweise mit dem das Licht 4 abgestrahlt werden kann. Darüber hinaus umfasst die Anzeigevorrichtung 2 eine Optikeinrichtung 5. Die Optikeinrichtung 5 umfasst vorliegend einen Spiegel 6. Das von der Bilderzeugungseinrichtung 3 abgestrahlte Licht 4 trifft zunächst auf den Spiegel 6 und anschließend auf ein Anzeigeelement 7. Die Bilderzeugungseinrichtung 3 und die Optikeinrichtung 5 sind vorliegend innerhalb eines Armaturenbretts des Kraftfahrzeugs 1 angeordnet.

Das Anzeigeelement 7 kann auch als Combinerspiegel, Combinerscheibe oder als Combiner bezeichnet werden. Das Anzeigeelement 7 weist eine Spiegelfläche auf und ist semitransparent ausgebildet. Das Anzeigeelement 7 ist aus einem Glas oder aus einem Kunststoff gebildet. Das Licht 4, das von der Bilderzeugungseinrichtung 3 abgestrahlt wird, wird mittels der Optikeinrichtung 5 auf das Anzeigeelement 7 projiziert. Ferner wird das Licht 4, das auf das Anzeigeelement 7 projiziert wird, zu den Augen 9 eines Fahrers des Kraftfahrzeugs 1 reflektiert. Somit überlagert sich diese Anzeige mit dem Licht, das von einem Umgebungsbereich 11 des Kraftfahrzeugs 1 zu den Augen 9 des Fahrers gelangt, mit dem Licht, das auf das Anzeigeelement 7 projiziert wird. Für den Fahrer des Kraftfahrzeugs 1 ergibt sich somit eine virtuelle Anzeige 10 beziehungsweise ein virtuelles Bild.

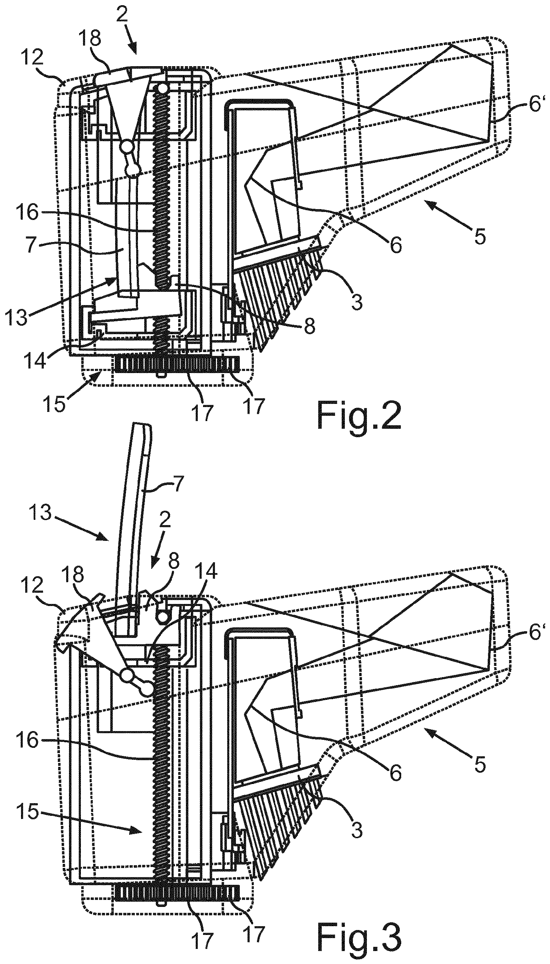

Fig. 2 zeigt die Anzeigevorrichtung 2 in einer weiteren Ausführungsform. Die Anzeigevorrichtung 2 umfasst ein Gehäuse 12, das beispielsweise aus Kunststoff gefertigt sein kann. In dem vorliegenden Ausführungsbeispiel umfasst die Optikeinrichtung 5 einen ersten Spiegel 6 und einen zweiten Spiegel 6'. Mit dem ersten Spiegel 6 kann das von der Bilderzeugungseinrichtung 3 abgestrahlte Licht 4 gefaltet werden und mit dem zweiten Spiegel 6' kann das Licht 4 auf das Anzeigeelement 7 projiziert werden, falls sich das Anzeigeelement 7 beziehungsweise eine Spiegeleinrichtung 13 in einer Gebrauchsstellung befindet.

Vorliegend ist das Anzeigeelement 7 Teil einer Spiegeleinrichtung 13. Die Spiegeleinrichtung 13 umfasst ferner ein Halteelement 8 zum Halten des Anzeigeelements 7 beziehungsweise des Combinerspiegels. Ferner umfasst die Spiegeleinrichtung 13 ein Trägerelement 14, welches mit dem Halteelement 8 mechanisch verbunden ist. Das Trägerelement 14 ist mit einer Antriebseinrichtung 15 mechanisch verbunden. Die Antriebseinrichtung 15 ist vorliegend als Spindelantrieb ausgebildet. Dabei ist das Trägerelement 14 mit einer Spindel 16 mechanisch verbunden. Die Spindel 16 kann über entsprechende Zahnräder 17 mit einem hier nicht dargestellten Motor angetrieben werden.

Fig. 2 zeigt die Anzeigevorrichtung 2, bei welcher sich die Spiegeleinrichtung 13 in der Verstaustellung befindet. Mithilfe der Antriebseinrichtung 15 kann die Spiegeleinrichtung 13 von der Verstaustellung in die Gebrauchsstellung bewegt werden. Fig. 3 zeigt die Anzeigevorrichtung 2, bei welcher sich die Spiegeleinrichtung 13 in der Gebrauchsstellung befindet. In der Verstaustellung befindet sich das Anzeigeelement 7 innerhalb des Gehäuses 12. In der Gebrauchsstellung befindet sich das Anzeigeelement 7 außerhalb des Gehäuses 12. Die Spiegeleinrichtung 13 wird bei der Bewegung von der Verstaustellung in die Gebrauchsstellung translatorisch mithilfe der Antriebseinrichtung 15 bewegt. Weiterhin weist das Gehäuse 12 ein Deckelelement 18 auf, welches sich in einer Geschlossenstellung befindet, falls sich die Spiegeleinrichtung 13 in der Verstaustellung befindet. Das Deckelelement 18 wird in einer Offenstellung bewegt, falls die Spiegeleinrichtung 13 von der Verstaustellung in die Gebrauchsstellung bewegt wird.

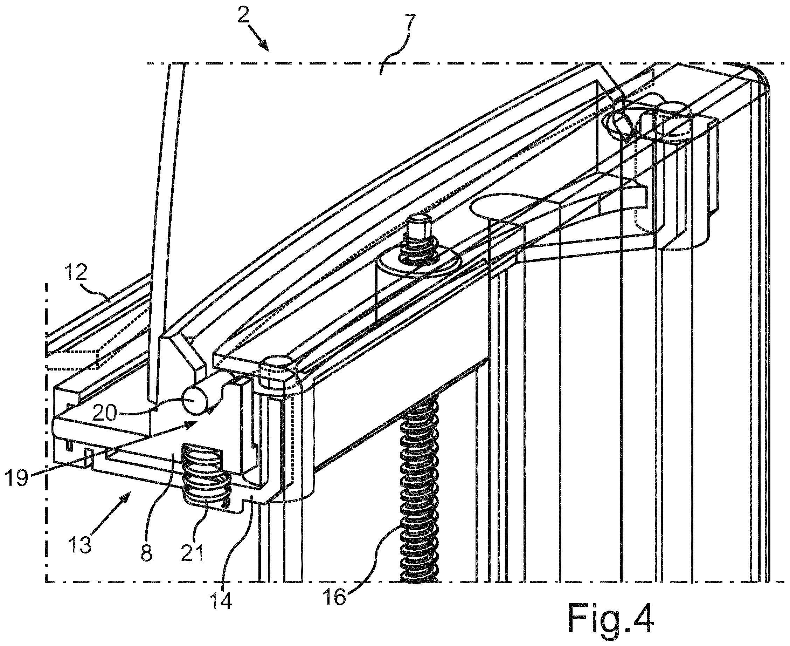

Fig. 4 zeigt eine Detailansicht der Anzeigevorrichtung 2, wobei sich die Spiegeleinrichtung 13 in der Gebrauchsstellung befindet. Hier ist zu erkennen, dass die Spiegeleinrichtung 13 ein Lagerelement 19 aufweist. Das Lagerelement 19 ist vorliegend als Ausnehmung innerhalb des Halteelements 8 ausgebildet. Ferner weist das Gehäuse 12 ein zu dem Lagerelement 19 korrespondierendes Gegenlagerelement 20 auf. Das Gegenlagerelement 20 ist vorliegend als Lagerbolzen ausgebildet, der ortsfest an dem Gehäuse 12 angeordnet ist. Wenn die Spiegeleinrichtung 13 mittels der Antriebseinrichtung 15 von der Verstaustellung in die Gebrauchsstellung bewegt wird, trifft das Lagerelement 19 auf das Gegenlagerelement 20. Dies bewirkt, dass der Lagerzapfen zumindest bereichsweise der Ausnehmung angeordnet ist. Das Lagerelement 19 und das Gegenlagerelement 20 bilden zusammen ein Drehlager. Somit kann das Anzeigeelement 7 in der Gebrauchsstellung der Spiegeleinrichtung 13 gedreht werden beziehungsweise rotatorisch bewegt werden. Wenn nach Erreichen der Gebrauchsstellung der Spiegeleinrichtung 13 weiterhin eine Kraft mittels der Antriebseinrichtung 15 auf die Spiegeleinrichtung 13 ausgeübt wird, wird die Spiegeleinrichtung 13 verdreht. Somit kann beispielsweise das Anzeigeelement 7 an die Position der Augen 9 des Fahrers eingestellt werden.

Weiterhin weist die Spiegeleinrichtung 13 ein Federelement 21 auf. Das Federelement 21 ist zwischen dem Halteelement 8 und dem Trägerelement 14 angeordnet. Somit kann einerseits erreicht werden, dass eine translatorische Verschiebung des Trägerelements 14 mittels der Antriebseinrichtung 15 zu einer rotatorischen Bewegung des Anzeigeelements 7 beziehungsweise des Combinerspiegels führt. Über das Federelement 21 werden das Halteelement 8 und das Trägerelement 14 zueinander vorgespannt. Somit kann ein Spiel zwischen dem Trägerelement 14 und dem Halteelement 8 eliminiert werden. Damit können Klappergeräusche während des Betriebs des Kraftfahrzeugs 1 unterbunden werden.

## Patentansprüche

1. Anzeigevorrichtung (2) für ein Kraftfahrzeug (1), mit einem Gehäuse (12), mit einer Spiegeleinrichtung (13), welche ein Anzeigeelement (7) mit einer semitransparenten Spiegelfläche aufweist, und mit einer Antriebseinrichtung (15), mittels welcher die Spiegeleinrichtung (13) zwischen einer Verstaustellung, in welcher das Anzeigeelement (7) innerhalb des Gehäuses (12) angeordnet ist, und einer Gebrauchsstellung, in welcher das Anzeigeelement (7) zumindest bereichsweise außerhalb des Gehäuses (12) angeordnet ist, bewegbar ist, wobei die Spiegeleinrichtung (13) ein Lagerelement (19) aufweist und das Gehäuse (12) ein zu dem Lagerelement (19) korrespondierendes Gegenlagerelement (20) aufweist, wobei das Lagerelement (19) in der Gebrauchsstellung der Spiegeleinrichtung (13) drehbar zu dem Gegenlagerelement (20) gelagert ist, **dadurch gekennzeichnet, dass**
die Lagereinrichtung (19) eine Ausnehmung aufweist und die Gegenlagereinrichtung (20) einen Lagerzapfen aufweist, welcher in der Gebrauchsstellung der Spiegeleinrichtung (13) zumindest bereichsweise in der Ausnehmung angeordnet ist, und
die Spiegeleinrichtung (13) ein Halteelement (8), welches zum Halten des Anzeigeelements (7) ausgelegt ist und welches das Lagerelement (19) aufweist, und ein Trägerelement (14), welches mit der Antriebseinrichtung (15) verbunden ist, aufweist, und
die Spiegeleinrichtung (13) ein Federelement (21) aufweist, wobei das Haltelement (8) mittels des vorgespannten Federelements (21) zu dem Trägerelement (14) gelagert ist.

2. Anzeigevorrichtung (2) nach Anspruch 1,
**dadurch gekennzeichnet, dass**
das Lagerelement (19) in der Gebrauchsstellung der Spiegeleinrichtung (13) an einem dem Gehäuse (12) zugewandten Randbereich der Spiegeleinrichtung (13) angeordnet ist.

3. Anzeigevorrichtung (2) nach Anspruch 1 oder 2,
**dadurch gekennzeichnet, dass**
die Antriebseinrichtung (15) dazu ausgelegt ist, die Spiegeleinrichtung (13) zwischen der Verstaustellung und der Gebrauchsstellung translatorisch zu bewegen.

4. Anzeigevorrichtung (2) nach einem der vorhergehenden Ansprüche,
**dadurch gekennzeichnet, dass**
die Antriebseinrichtung (15) dazu ausgelegt ist, die Spiegeleinrichtung (13) in der Gebrauchsstellung zu drehen.

5. Anzeigevorrichtung (2) nach einem der vorhergehenden Ansprüche,
**dadurch gekennzeichnet, dass**
die Antriebseinrichtung (15) einen Spindelantrieb umfasst.

6. Anzeigevorrichtung (2) nach einem der vorhergehenden Ansprüche,
**dadurch gekennzeichnet, dass**
das Federelement (21) in der Gebrauchsstellung und/oder in der Verstaustellung der Spiegeleinrichtung (13) vorgespannt ist.

7. Anzeigevorrichtung (2) nach einem der vorhergehenden Ansprüche,
**dadurch gekennzeichnet, dass**
das Gehäuse (12) ein Deckelelement (18) aufweist, welches sich in der Verstaustellung der Spiegeleinrichtung (13) in einer Geschlossenstellung und in der Gebrauchsstellung der Spiegeleinrichtung (13) in einer Offenstellung befindet.

8. Anzeigevorrichtung (2) nach einem der vorhergehenden Ansprüche,
**dadurch gekennzeichnet, dass**
die Anzeigevorrichtung (2) eine Bilderzeugungseinrichtung (3) zum Abstrahlen von Licht (4) und eine Optikeinrichtung (5) zum Projizieren des von der Bilderzeugungseinrichtung (3) abgestrahlten Lichts (4) auf das Anzeigeelement (7) aufweist.

9. Kraftfahrzeug (1) mit einer Anzeigevorrichtung (2) nach einem der vorhergehenden Ansprüche.

10. Verfahren zum Betreiben einer Anzeigevorrichtung (2) für eine Kraftfahrzeug (1), bei welchem eine Spiegeleinrichtung (13), welche ein Anzeigeelement (7) mit einer semitransparenten Spiegelfläche aufweist, welche mittels einer Antriebseinrichtung (15) zwischen einer Verstaustellung, in welcher das Anzeigeelement (7) innerhalb eines Gehäuses (12) angeordnet ist, und einer Gebrauchsstellung, in welcher das Anzeigeelement (7) zumindest teilweise außerhalb des Gehäuses (12) angeordnet ist, bewegt wird, und die Spiegeleinrichtung (13) ein Lagerelement (19) aufweist und das Gehäuse (12) ein zu dem Lagerelement (19) korrespondierendes Gegenlagerelement (20) aufweist, wobei das Lagerelement (19) in der Gebrauchsstellung der Spiegeleinrichtung (13) relativ zu dem Gegenlagerelement (20) gedreht wird
**dadurch gekennzeichnet, dass**
die Lagereinrichtung (19) eine Ausnehmung aufweist und die Gegenlagereinrichtung (20) einen Lagerzapfen aufweist, wobei der Lagerzapfen in der Gebrauchsstellung der Spiegeleinrichtung (13) zumindest bereichsweise in der Ausnehmung angeordnet wird, und
die Spiegeleinrichtung (13) ein Halteelement (8), welches das Anzeigeelement (7) hält und welches das Lagerelement (19) aufweist, und ein Trägerelement (14), aufweist, welches mit der Antriebseinrichtung (15) verbunden wird, und
die Spiegeleinrichtung (13) ein Federelement (21) aufweist, wobei das Haltelement (8) mittels des vorgespannten Federelements (21) zu dem Trägerelement (14) gelagert wird.

## Claims

1. Display device (2) for a motor vehicle (1), comprising a housing (12), comprising a mirror device (13) which has a display element (7) with a semitransparent mirror surface, and comprising a drive device (15), by means of which the mirror device (13) is movable between a stowed position, in which the display element (7) is arranged inside the housing (12), and a use position, in which the display element (7) is at least zonally arranged outside the housing (12), the mirror device (13) having a support element (19) and the housing (12) having a mating support element (20) corresponding to the support element (19), the support element (19) being mounted so as to be rotatable relative to the mating support element (20) in the use position of the mirror device (13),
**characterized in that**
the support device (19) has a recess, and the mating supporting device (20) has a bearing pin which, in the use position of the mirror device (13), is at least zonally arranged in the recess, and
the mirror device (13) has a holding element (8), which is designed to hold the display element (7) and which has the support element (19), and a carrier element (14), which is connected to the drive device (15), and
the mirror device (13) has a spring element (21), wherein the holding element (8) is mounted relative to the carrier element (14) by means of the pre-tensioned spring element (21).

2. Display device (2) according to Claim 1,
**characterized in that**
in the use position of the mirror device (13), the support element (19) is arranged on an edge region of the mirror device (13) that faces the housing (12) .

3. Display device (2) according to Claim 1 or 2,
**characterized in that**
the drive device (15) is designed to move the mirror device (13) translationally between the stowed position and the use position.

4. Display device (2) according to one of the preceding claims,
**characterized in that**
the drive device (15) is designed to rotate the mirror device (13) in the use position.

5. Display device (2) according to one of the preceding claims,
**characterized in that**
the drive device (15) comprises a spindle drive.

6. Display device (2) according to one of the preceding claims,
**characterized in that**
the spring element (21) is pre-tensioned in the use position and/or in the stowed position of the mirror device (13).

7. Display device (2) according to one of the preceding claims,
**characterized in that**
the housing (12) has a cover element (18), which is located in a closed position in the stowed position of the mirror device (13) and is located in an open position in the use position of the mirror device (13) .

8. Display device (2) according to one of the preceding claims,
**characterized in that**
the display device (2) has an image generating device (3) for emitting light (4) and an optical device (5) for projecting the light (4) emitted by the image generating device (3) onto the display element (7).

9. Motor vehicle (1) having a display device (2) according to one of the preceding claims.

10. Method for operating a display device (2) for a motor vehicle (1), in which a mirror device (13), which has a display element (7) with a semitransparent mirror surface which is moved by means of a drive device (15) between a stowed position, in which the display element (7) is arranged inside a housing (12), and a use position, in which the display element (7) is at least partly arranged outside the housing (12), and the mirror device (13) has a support element (19) and the housing (12) has a mating support element (20) corresponding to the support element (19), the support element (19) being rotated relative to the mating support element (20) in the use position of the mirror device (13),
**characterized in that**
the support device (19) has a recess and the mating support device (20) has a bearing pin, wherein the bearing pin is at least zonally arranged in the recess in the use position of the mirror device (13), and
the mirror device (13) has a holding element (8), which holds the display element (7) and which has the support element (19), and a carrier element (14), which is connected to the drive device (15), and the mirror device (13) has a spring element (21), wherein the holding element (8) is mounted relative to the carrier element (14) by means of the pre-tensioned spring element (21).

## Revendications

1. Dispositif d'affichage (2) pour un véhicule automobile (1), muni d'un boîtier (12) avec un dispositif de miroir (13), qui présente un élément d'affichage (7) avec une face de miroir semi-transparente, et avec un dispositif d'entraînement (15), au moyen duquel le dispositif de miroir (13) est déplaçable entre une position de rangement, dans laquelle l'élément d'affichage (7) est disposé à l'intérieur du boîtier (12), et une position d'utilisation, dans laquelle l'élément d'affichage (7) est disposé au moins localement à l'extérieur du boîtier (12), dans lequel le dispositif de miroir (13) présente un élément de palier (19) et le boîtier (12) présente un contre-élément de palier (20) correspondant à l'élément de palier (19), dans lequel l'élément de palier (19) est monté, dans la position d'utilisation du dispositif de miroir (13), de façon rotative par rapport au contre-élément de palier (20),
**caractérisé en ce que**
le dispositif de palier (19) présente un évidement et le contre-élément de palier (20) présente un tourillon, qui dans la position d'utilisation du dispositif de miroir (13) est disposé au moins par endroits dans l'évidement, et
le dispositif de miroir (13) présente un élément de maintien (8), qui est conçu pour maintenir l'élément d'affichage (7) et qui présente l'élément de palier (19), et un élément de support (14), qui est relié au dispositif d'entraînement (15), et
le dispositif de miroir (13) présente un élément de ressort (21), dans lequel l'élément de maintien (8) est supporté par rapport à l'élément de support (14) au moyen de l'élément de ressort précontraint (21).

2. Dispositif d'affichage (2) selon la revendication 1, **caractérisé en ce que** l'élément de palier (19), dans la position d'utilisation du dispositif de miroir (13), est disposé sur une région de bord du dispositif de miroir (13) tournée vers le boîtier (12).

3. Dispositif d'affichage (2) selon une revendication 1 ou 2, **caractérisé en ce que** le dispositif d'entraînement (15) est conçu pour déplacer le dispositif de miroir (13) entre la position de rangement et la position d'utilisation.

4. Dispositif d'affichage (2) selon l'une quelconque des revendications précédentes, **caractérisé en ce que** le dispositif d'entraînement (15) est conçu pour faire tourner le dispositif de miroir (13) dans la position d'utilisation.

5. Dispositif d'affichage (2) selon l'une quelconque des revendications précédentes, **caractérisé en ce que** le dispositif d'entraînement (15) comprend un entraînement à broche.

6. Dispositif d'affichage (2) selon l'une quelconque des revendications précédentes, **caractérisé en ce que** l'élément de ressort (21) est précontraint dans la position d'utilisation et/ou dans la position de rangement du dispositif de miroir (13).

7. Dispositif d'affichage (2) selon l'une quelconque des revendications précédentes, **caractérisé en ce que** le boîtier (12) présente un élément de couvercle (18), qui se trouve dans une position fermée dans la position de rangement du dispositif de miroir (13) et dans une position ouverte dans la position d'utilisation du dispositif de miroir (13).

8. Dispositif d'affichage (2) selon l'une quelconque des revendications précédentes, **caractérisé en ce que** le dispositif d'affichage (2) présente un système de production d'image (3) pour émettre de la lumière (4) et un système optique (5) pour projeter la lumière (4) émise par le système de production d'image (3) sur l'élément d'affichage (7).

9. Véhicule automobile (1) muni d'un dispositif d'affichage (2) selon l'une quelconque des revendications précédentes.

10. Procédé de fonctionnement d'un dispositif d'affichage (2) pour un véhicule automobile (1), dans lequel on déplace un dispositif de miroir (13), qui présente un élément d'affichage (7) avec une face de miroir semi-transparente, qui est déplacé au moyen d'un dispositif d'entraînement (15) entre une position de rangement, dans laquelle l'élément d'affichage (7) est disposé à l'intérieur d'un boîtier (12), et une position d'utilisation, dans laquelle l'élément d'affichage (7) est disposé au moins en partie à l'extérieur du boîtier (12), et le dispositif de miroir (13) présente un élément de palier (19) et le boîtier (12) présente un contre-élément de palier (20) correspondant à l'élément de palier (19), dans lequel on fait tourner l'élément de palier (19) par rapport au contre-élément de palier (20) dans la position d'utilisation du dispositif de miroir (13),
**caractérisé en ce que**
le dispositif de palier (19) présente un évidement et le contre-élément de palier (20) présente un tourillon, dans lequel on dispose le tourillon dans la position d'utilisation du dispositif de miroir (13) au moins par endroits dans l'évidement, et
le dispositif de miroir (13) présente un élément de maintien (8), qui maintient l'élément d'affichage (7) et qui présente l'élément de palier (19), et un élément de support (14), que l'on relie au dispositif d'entraînement (15), et
le dispositif de miroir (13) présente un élément de ressort (21), dans lequel on supporte l'élément de maintien (8) par rapport à l'élément de support (14) au moyen de l'élément de ressort précontraint (21).
